# EUROPÄISCHE PATENTANMELDUNG

(11) **EP 3 842 176 A1**
(43) Veröffentlichungstag der Anmeldung: **30.06.2021**
(21) Anmeldenummer: 19219258.1
(22) Anmeldetag: 23.12.2019
(51) Int. Cl.: B23K 26/14, B23K 26/70, G02B 27/00, G02B 7/02

(54) **OPTISCHE EINHEIT ZUR LASERBEARBEITUNG EINES WERKSTÜCKS LASERBEARBEITUNGSVORRICHTUNG**

(71) Anmelder: Bystronic Laser AG, 3362 Niederönz (CH)
(72) Erfinder: SCHEIDIGER, Simon, 4900 Langenthal (CH); MUMENTHALER, Martin, 4938 Rohrbach (CH); LÜDI, Andreas, 3400 Burgdorf (CH)
(74) Vertreter: Patentanwälte Geyer, Fehners & Partner mbB

(57) **Zusammenfassung**

Es wird eine optische Einheit für einen Laserstrahl zur Laserbearbeitung eines Werkstücks, insbesondere für einen Hochleistungslaserstrahl, bereitgestellt, mit einem optischen Element zur optischen Abbildung des Laserstrahls, und zwei für den Laserstrahl transparenten Schutzgläsern, deren Außenränder von einer Halterung luftdicht derart umschlossen sind, dass sie mit der Halterung einen Innenraum bilden, wobei das optische Element im Innenraum angeordnet ist. Es wird ferner eine Laserbearbeitungsvorrichtung bereitgestellt.

## Beschreibung

Die vorliegende Erfindung betrifft eine optische Einheit für einen Laserstrahl zur Laserbearbeitung eines Werkstücks, eine Laserbearbeitungsvorrichtung und eine Verwendung einer optischen Einheit oder einer Laserbearbeitungsvorrichtung.

Bei der Laserbearbeitung von Werkstücken, insbesondere bei Verfahren zum thermischen Trennen von Werkstoffen mittels Laserstrahlung, wie Laserschneiden, werden Laserbearbeitungsvorrichtungen eingesetzt. Dabei wird ein Bearbeitungslaserstrahl auf das Werkstück geführt, beispielsweise auf ein zu bearbeitendes Blech. Dies geschieht typischerweise durch optische Abbildung des Laserstrahles auf das zu bearbeitende Werkstück mittels einer oder mehrerer Optiken. Optische Abbildung bedeutet in diesem Zusammenhang, dass der Laserstrahl zum Beispiel durch Brechung, Reflexion, Beugung und/oder Strahlformung auf das Werkstück geleitet wird.

Typischerweise werden für eine Hochleistungslaserbearbeitung Optiken aus Quarzglas (Fused Silica, FS) verwendet, wie zum Beispiel Linsen. Eine Optik aus Quarzglas absorbiert Laserleistung nur in geringem Ausmaß, erwärmt sich kaum, ist sehr gut zu beschichten, weist sehr gute Abbildungseigenschaften auf und ist vergleichsweise preiswert. Nachteil von Quarzglasoptiken ist hingegen, dass sie sehr schmutzempfindlich sind. Ist eine geringe Kontamination auf der Optik vorhanden, erwärmt sich diese aufgrund der Laserleistung und die entstehende Wärme kann nicht ausreichend abgeführt werden, da Quarzglas kaum Wärme leitet. Quarzglasoptiken, die für eine Hochleistungslaserbearbeitung eingesetzt werden, können daher durch anhaftende Kontamination, z.B. Schmutzpartikel oder Feuchtigkeit, beschädigt und/oder in ihren Abbildungseigenschaften beeinträchtigt werden. Insbesondere bei Hochleistungsanwendungen mit Laser im industriellen Umfeld ist dies nachteilig. Da das industrielle Umfeld bei Hochleistungs-Laseranwendungen, insbesondere beim Schneiden und Schweissen von Metallen, normalerweise mit grosser Verschmutzung einhergeht, ist es von Vorteil, die Schmutzempfindlichkeit von eingesetzten Komponenten zu berücksichtigen. Beispielsweise kann bei einer Fokussierlinse aus Quarz durch die lokale Erwärmung im Bereich einer Kontamination ein unerwünschter Fokusshift, d.h. eine Verschiebung des Fokus in Ausbreitungsrichtung und/oder in einem Winkel zur Ausbreitungsrichtung des Laserstrahls, induziert werden. Oft fallen aufgrund von (bereits nur sehr leicht) verschmutzten Quarzglasoptiken Laserbearbeitungssysteme aus. EP 2511040 A1 beschreibt eine Kassette zur Halterung einer Optik in einem Laserbearbeitungskopf mit einer transparenten Schutzvorrichtung.

Ein alternatives Material für Hochleistungslaseroptiken ist Zinksulfid (ZnS). ZnS hat eine gute Wärmeleitung. Allerdings ist das Material nicht nur teuer, sondern auch typischerweise kristallin und anisotrop, und weist eine vergleichsweise hohe Laserabsorption und eine Vorwärtsstreuung von ca. 2-3% auf. Das heisst, dass 2-3% der beaufschlagten Laserleistung nicht wie vorgesehen abgebildet, z.B. fokussiert, werden. Vielmehr werden 2-3% der Laserleistung in einem mehr oder weniger grossen Streukegel unkontrolliert vorwärts gestreut. Folge davon ist, dass die Umgebung der Optik aus ZnS, z.B. Optikhalterungen oder ganze Laserbearbeitungsköpfe, aufgeheizt wird. Auch kann der Laserbearbeitungsprozess aufgrund des Streulichtes nachteilig beeinflusst werden.

Als ein weiteres Material für Hochleistungslaseroptiken wurde Saphir vorgeschlagen. Dieses Material streut weniger als ZnS (jedoch mehr als FS) und hat eine akzeptable Wärmeleitung, sodass geringe Verschmutzungen nicht gleich zu einem Ausfall der Optik bzw. des Laserbearbeitungssystems führen. Allerdings ist Saphir teuer und aufgrund der sehr grossen Härte schwierig zu bearbeiten (z.B. schleifen, polieren). Auch bestehen bei der Fertigung von gekrümmten Optiken aus Saphir Einschränkungen hinsichtlich der Formgebung (z.B. Randdicke, Krümmungsradien).

Weiter hat Saphir den Nachteil, dass das Material anisotrop ist und Doppelbrechung aufweist. Das hat zur Folge, dass Licht je nach Polarisation durch gekrümmte Optiken aus Saphir unterschiedlich abgebildet wird. Da ein Laserstrahl in den meisten Fällen (insbesondere bei Hochleistungslasern) verschiedene bzw. zufällige Polarisationen aufweist, führt diese Doppelbrechung zu Abbildungsfehlern (Astigmatismus).

Aufgabe der Erfindung ist es, eine optische Einheit mit geringer Empfindlichkeit für Oberflächenkontamination und guten Abbildungseigenschaften anzugeben.

Diese Aufgabe wird gelöst durch eine optische Einheit nach Anspruch 1, eine Laserbearbeitungsvorrichtung nach Anspruch 11 und eine Verwendung einer optischen Einheit oder einer Laserbearbeitungsvorrichtung nach Anspruch 14.

Die Erfindung betrifft in einer Ausführungsform eine optische Einheit für einen Laserstrahl zur Laserbearbeitung eines Werkstücks, insbesondere für einen Hochleistungslaserstrahl, mit einem optischen Element zur optischen Abbildung des Laserstrahls, und zwei für den Laserstrahl transparenten Schutzgläsern, deren Außenränder von einer Halterung luftdicht derart umschlossen sind, dass sie mit der Halterung einen Innenraum bilden, wobei das optische Element im Innenraum angeordnet ist.

Die optische Einheit ist somit als eine zusammengesetzte Optik ausgebildet, mit transparenten Schutzgläsern und einem optischen Element. Da das optische Element im luftdichten Innenraum, der von den Schutzgläsern und der Halterung gebildet wird, angeordnet ist, werden die Oberflächen des optischen Elements vor unerwünschter Kontamination mit Staub- und Schmutzpartikeln, Feuchtigkeit und Gasen geschützt. Wenn ein Laserstrahl, insbesondere Hochleistungslaserstrahl, auf das optische Element auftrifft, wird dieses somit nicht durch Oberflächen-Kontaminationen erwärmt. Auch bei Langzeit- und/oder Hochleistungslaseranwendungen werden daher Beschädigungen des optischen Elements vermieden und die Abbildungseigenschaften des optischen Elements werden nicht beeinträchtigt. Insbesondere können Vorwärtsstreuung und Doppelbrechung durch die optische Einheit vermieden werden.

Das optische Element kann eine Wärmeleitfähigkeit von kleiner oder gleich 2 W/(m K) besitzen. Das optische Element kann ferner mindestens ein Material ausgewählt aus Quarzglas und Kalziumfluorid enthalten oder daraus gebildet sein. Da das optische Element zwar eine geringe Wärmeleitfähigkeit aufweist, jedoch vor Oberflächenkontaminationen geschützt ist, wird eine Beschädigung des optischen Elements bei Lasereinstrahlung vermieden.

Mindestens eines der Schutzgläser kann eine Wärmeleitfähigkeit größer oder gleich 10 W/(m K) besitzen. Mindestens eines der Schutzgläser kann zudem mindestens ein Material ausgewählt aus Saphir und Zinksulfid enthalten oder daraus gebildet sein. Dabei kann die optische Abbildung des Laserstrahls durch das optische Element und nicht durch die Schutzgläser bewirkt werden. Daher kann auch bei Einsatz von Schutzgläsern mit einer Wärmeleitfähigkeit größer oder gleich 10 W/(m K) und/oder mit den vorgenannten Materialien Saphir und Zinksulfid eine Vorwärtsstreuung und eine Doppelbrechung vermieden werden Gleichzeitig sind die so gearteten Schutzgläser vergleichsweise unempfindlich gegenüber Oberflächenkontaminationen und/oder vergleichsweise robust bei Oberflächenkontaminationen, z.B. verglichen mit FS. In allen Ausführungsformen können mindestens eines der Schutzgläser und/oder das optische Element aus hochreinen optischen Materialien gebildet sein.

In dem von den Schutzgläsern und der Halterung gebildeten Innenraum können eine Reinraumatmosphäre, ein inertes Gas, ein Vakuum und/oder eine nicht kondensierende Atmosphäre vorgesehen sein. Als inertes Gas kann Stickstoff oder ein Edelgas, z.B. Argon, eingesetzt werden. Die nicht kondensierende Atmosphäre kann beispielsweise eine absolute Feuchte kleiner oder gleich 0,2 g/m³ besitzen. Diese Maßnahmen ermöglichen eine zusätzliche Minimierung von Oberflächenkontaminationen des optischen Elements.

Das optische Element kann zwischen den Schutzgläsern und/oder im Strahlengang des Laserstrahls zwischen den Schutzgläsern angeordnet sein. So kann die optische Einheit derart ausgebildet sein, dass der Laserstrahl zum Beispiel sowohl auf die Schutzgläser als auch auf das optische Element im Wesentlichen senkrecht auftrifft. Alternativ kann das optische Element zum Beispiel als reflektierender Spiegel ausgebildet sein, auf den der Laserstrahl in einem Winkel zur Senkrechten auftrifft, während er auf die Schutzgläser im Wesentlichen senkrecht auftrifft. Zusätzlich oder alternativ kann das optische Element benachbart und/oder beabstandet zu mindestens einem der Schutzgläser angeordnet sein. Zum Beispiel ist zwischen dem optischen Element und dem/den benachbarten Schutzglas/Schutzgläsern kein weiteres Element angeordnet. Bei einem Abstand des optischen Elements zu mindestens einem der Schutzgläser wird ferner einen Berührung zwischen diesen vermieden. Das optische Element und die Schutzgläser können zudem eine Sandwichstruktur bilden. Das optische Element und/oder die Schutzgläser können ferner an der Halterung befestigt oder angebracht sein. Die vorgenannten Ausgestaltungen der optischen Einheit ermöglichen eine kompakte und raumsparende Konfiguration der optischen Einheit.

In der optischen Einheit von Ausführungsformen kann mindestens eines der Schutzgläser als im Wesentlichen planparallele Platte ausgebildet sein. Plane Schutzgläser können vorteilhafterweise kostengünstig hergestellt werden. Ferner können die Schutzgläser im Wesentlichen parallel zueinander angeordnet sein. Die Schutzgläser und eine Ebene des optischen Elements, die im Wesentlichen senkrecht zu einer optischen Achse des optischen Elements und/oder zu einer Ausbreitungsrichtung des Laserstrahls ausgerichtet ist, können im Wesentlichen parallel zueinander angeordnet sein. Auch diese Ausgestaltungen der optischen Einheit ermöglichen eine kompakte und raumsparende Konfiguration der optischen Einheit bei gleichzeitiger geringer Empfindlichkeit für Oberflächenkontamination und guten Abbildungseigenschaften für den Laserstrahl.

In Ausführungsformen der optischen Einheit können die Schutzgläser mit einem Optikkleber und/oder mit einer Verschraubung an der Halterung befestigt oder angebracht sein. Ferner kann das optische Element mit einem Optikkleber und/oder mit einer Verschraubung an der Halterung befestigt oder angebracht sein. Diese Ausgestaltungen ermöglichen eine Verbindung der optischen Einheit und/oder der Schutzgläser mit der Halterung.

In weiteren Ausgestaltungen der optischen Einheit kann die Halterung mit einer Kühleinrichtung, insbesondere mit internen Kühlkanälen, versehen sein. Dies ermöglicht eine Kühlung der Halterung und damit auch des optischen Elements und/oder der Schutzgläser im Einsatz bei der Laserbearbeitung.

Das optische Element kann zur optischen Abbildung des Laserstrahls derart ausgebildet sein, dass es für den Laserstrahl zumindest teilweise reflektiv ist, für den Laserstrahl zumindest teilweise transmissiv ist, für den Laserstrahl eine Brennweite einstellt, den Laserstrahl leitet, den Laserstrahl umlenkt und/oder den Laserstrahl formt. Alternativ oder zusätzlich kann mindestens eines der Schutzgläser derart ausgebildet sein, dass es die optischen Eigenschaften des Laserstrahls im Wesentlichen nicht verändert. Mit diesen Ausgestaltungen einzeln oder in Kombination kann nicht nur die gewünschte optische Abbildung des Laserstrahls realisiert werden. Die optische Abbildung des Laserstrahls kann zudem durch das optische Element und nicht durch die Schutzgläser bewirkt werden. Daher kann auch bei Einsatz von Schutzgläsern mit einer Wärmeleitfähigkeit größer oder gleich 10 W/(m K) und/oder enthaltend Saphir und/oder Zinksulfid eine Vorwärtsstreuung und eine Doppelbrechung vermieden werden. Gleichzeitig sind die so gearteten Schutzgläser vergleichsweise unempfindlich gegenüber Oberflächenkontaminationen.

In Ausführungsformen der optischen Einheit kann die optische Einheit und/oder die Halterung derart ausgebildet sein, dass eine Wärmeausdehnung mindestens einer Komponente der optischen Einheit toleriert wird, insbesondere luftdicht toleriert wird, wobei die Komponente ausgewählt ist aus einem oder zwei der Schutzgläser, dem optischen Element, der Halterung, dem Optikkleber, der Verschraubung, der Kühleinrichtung, einer Atmosphäre im Innenraum und/oder eines Gases im Innenraum. Durch die Tolerierung der Wärmeausdehnung der mindestens einen Komponente kann eine dadurch bewirkte Vergrößerung der Komponente toleriert werden, ohne dass eine oder mehrere Komponenten der optischen Einheit beschädigt werden. Auch wenn sich das optische Element und/oder eine andere Komponente der optischen Einheit durch Erwärmung ausdehnt, kann auf diese Weise insbesondere ein radiales Spiel des optischen Elements bereitgestellt werden, damit es sich in der optischen Einheit und/oder in der Halterung nicht verspannt. Zum Beispiel können ein Optikkleber und/oder eine Halterung verwendet werden, die aufgrund ihres Elastizitätsmoduls ihres Materials eine ausreichende Elastizität besitzen, welche die Wärmeausdehnung der Optik zumindest teilweise aufnehmen kann. Der Kleber kann ein Elastizitätsmodul von 100 bis 500 MPa, bevorzugt 150 bis 250 MPa, mehr bevorzugt 180 bis 220 MPa besitzen. Im Falle einer Verschraubung kann die Wärmeausdehnung mindestens einer Komponente der optischen Einheit dadurch toleriert werden, dass die Schutzgläser 14 und/oder das optische Element 12 an der Innenwand der Halterung 16 auf oder an mindestens einer leicht verformbaren Fassung, z.B. einem Innenring, liegen und ein radiales Spiel aufweisen.

Bei Ausführungsformen der optischen Einheit kann mindestens eine erste Einrichtung zum Überwachen der optischen, thermischen und/oder mechanischen Eigenschaften mindestens eines der Schutzgläser und/oder des optischen Elements vorgesehen sein. In einigen Ausgestaltungen kann im Wesentlichen eine allfällige Verschmutzung auf den Schutzgläsern und/oder auf dem optischen Element überwacht werden.

Eine Verschmutzung und/oder Partikel und/oder Feuchtigkeitstropfen auf den Schutzgläsern und/oder auf dem optischen Element verursachen typischerweise Streulicht durch Streuung des Laserstrahls. Dieses Streulicht kann gemäß Ausführungsformen mit mindestens einer Photodiode (PD) detektiert werden. Zum Beispiel können die Schutzgläser und/oder das optische Element mit mindestens einer seitlich der optischen Einheit vorgesehenen Photodiode überwacht werden. Die mindestens eine Photodiode kann dabei Teil der optischen Einheit sein, kann z.B. außen an der Halterung der optischen Einheit vorgesehen sein. Alternativ kann ein lichtdurchlässiges Loch seitlich in der Halterung vorgesehen sein. So kann mit mindestens einer Photodiode, die ein Teil der optischen Einheit oder separat bereitgestellt ist, durch das lichtdurchlässige Loch die äußere und/oder innere Oberfläche des Schutzglases und/oder des optischen Elements in seitlicher Draufsicht überwacht werden.

Ferner kann ein Thermofühler, z.B. Pt100, vorgesehen sein, mit dem die Temperatur z.B. der Halterung der optischen Einheit überwacht wird. Hierfür kann ein Kontakt des Thermofühlers zur überwachten Komponente der optischen Einheit vorgesehen sein, so dass der Thermofühler zumindest teilweise Bestandteil der optischen Einheit ist. Thermofühler werden alternativ auch Temperaturfühler genannt.

Des Weiteren können optische Detektoren vorgesehen sein, welche von der jeweiligen zu überwachenden Komponente ausgehende Wärmestrahlung detektieren (z.B. Thermopile). Die optischen Detektoren können zumindest teilweise Bestandteil der optischen Einheit sein. Solche Detektoren können auch separat von der optischen Einheit bereitgestellt sein.

Die Erfindung betrifft in einer Ausführungsform eine Laserbearbeitungsvorrichtung, insbesondere einen Laserbearbeitungskopf, mit einer Schnittstelle für eine Laserquelle zum Erzeugen eines Laserstrahls; und einer optischen Einheit nach einer der vorstehenden Ausführungsformen, wobei die optische Einheit im Strahlengang des Laserstrahls angeordnet ist. So können die für die optische Einheit genannten Vorteile und Wirkungen in einer Laserbearbeitungsvorrichtung realisiert werden.

In Ausführungsformen der Laserbearbeitungsvorrichtung kann eine Kühlvorrichtung vorgesehen sein, die mit der Kühleinrichtung, insbesondere mit den Kühlkanälen, der Halterung gekoppelt ist. Zusätzlich oder alternativ kann die Schnittstelle mit einer Laserquelle gekoppelt oder versehen sein, die den Laserstrahl mit einer Leistung größer oder gleich 6 kW, bevorzugt größer oder gleich 10 kW, bereitstellt.

Die Laserbearbeitungsvorrichtung kann ferner mindestens eine zweite Einrichtung zum Überwachen der optischen, thermischen und/oder mechanischen Eigenschaften mindestens eines der Schutzgläser und/oder des optischen Elements aufweisen. Zum Beispiel kann in der Laserbearbeitungsvorrichtung mindestens eine Photodiode oberhalb und/oder unterhalb der optischen Einheit separat davon angebracht sein. Mit der mindestens einen Photodiode kann die Oberfläche der zu überwachenden Komponente, z.B. die optische Einheit und/oder eines oder beide Schutzgläser, beobachtet werden. Ferner kann in der Laserbearbeitungsvorrichtung ein Thermofühlervorgesehen sein, mit dem die Temperatur z.B. der Halterung der optischen Einheit überwacht wird. Hierfür kann ein Kontakt des Thermofühlers zur überwachten Komponente der optischen Einheit ausgebildet sein. Des Weiteren können in der Laserbearbeitungsvorrichtung optische Detektoren vorgesehen sein, welche von der jeweiligen zu überwachenden Komponente ausgehende Wärmestrahlung detektieren (z.B. Thermopile). Solche Detektoren können separat von der optischen Einheit bereitgestellt sein. Als Thermofühler kann z.B. ein Widerstands-Temperaturfühler, auch RTD (Resistance Temperature Detector) genannt, insbesondere Pt100 als ein Platin-Widerstand-Temperaturfühler mit einem Nennwiderstand von 100 Ohm, eingesetzt werden.

Mit der Laserbearbeitungsvorrichtung der vorstehenden Ausführungsformen können die gleichen Vorteile, Betriebsmodi und Funktionen realisiert werden, wie mit den Ausführungsformen der optischen Einheit, insbesondere mit gleichlautenden und/oder analogen Merkmalen.

Die Erfindung betrifft in einer Ausführungsform eine Verwendung einer optischen Einheit nach einer der vorstehenden Ausführungsformen oder einer Laserbearbeitungsvorrichtung nach einer der vorstehenden Ausführungsformen zur Laserbearbeitung eines Werkstücks, insbesondere zur Hochleistungslaserbearbeitung. Auf diese Weise können die für die optische Einheit genannten Vorteile und Wirkungen im Rahmen einer Laserbearbeitung eines Werkstücks realisiert werden. Insbesondere kann die optische Einheit zum Laserschneiden oder zum Laserschweißen, jeweils z.B. unter Einsatz eines Hochleistungslasers mit einer Wellenlänge von ungefähr 1 pm, (Faserlaser, Scheibenlaser) verwendet werden.

Weitere Merkmale und Zweckmäßigkeiten ergeben sich aus der folgenden Beschreibung von Ausführungsformen, den Figuren und den Unteransprüchen.

Alle hier beschriebenen und sich nicht gegenseitig ausschließenden Merkmale von Ausführungsformen können miteinander kombiniert werden. Gleiche Elemente der Ausführungsformen sind in der folgenden Beschreibung mit den gleichen Bezugszeichen versehen. Einzelne oder mehrere Elemente einer Ausführungsform können in den anderen Ausführungsformen genutzt werden ohne weitere Erwähnung. Ausführungsformen der Erfindung werden nun durch die nachfolgenden Beispiele anhand von Figuren genauer beschrieben, ohne sie dadurch einschränken zu wollen. Es zeigen:
- Fig. 1: schematisch ein Beispiel einer optischen Einheit 10 für einen Laserstrahl zur Laserbearbeitung eines Werkstücks, gemäß Ausführungsformen der Erfindung;
- Fig. 2: schematisch ein Beispiel einer optischen Einheit 20 für einen Laserstrahl zur Laserbearbeitung eines Werkstücks, in einer seitlichen Querschnittsansicht, gemäß Ausführungsformen der Erfindung;
- Fig. 3a und 3b: schematisch beispielhaft ein Detail der optischen Einheit für einen Laserstrahl zur Laserbearbeitung eines Werkstücks, in einer seitlichen Querschnittsansicht, gemäß Ausführungsformen der Erfindung;
- Fig. 3c und 3d: schematisch beispielhaft ein Detail der optischen Einheit für einen Laserstrahl zur Laserbearbeitung eines Werkstücks, in einer seitlichen Querschnittsansicht, gemäß Ausführungsformen der Erfindung;
- Fig. 4: schematisch ein weiteres Beispiel einer optischen Einheit 30 gemäß Ausführungsformen der Erfindung;
- Fig. 5: schematisch ein Beispiel einer Laserbearbeitungsvorrichtung 100 gemäß Ausführungsformen der Erfindung; und
- Fig. 6: schematisch ein Beispiel einer Laserbearbeitungsvorrichtung 200 gemäß Ausführungsformen der Erfindung.

### Beispiele

Im Folgenden wird die optische Einheit und/oder die Bearbeitungsvorrichtung gemäß Ausführungsformen der Erfindung unter anderem anhand von Beispielen mit einem Bearbeitungskopf (auch Laserbearbeitungskopf genannt) beschrieben, ohne die Erfindung darauf zu begrenzen. Die optische Einheit kann z.B. in einem Laserschweisskopf oder in einem Laserschneidkopf vorgesehen sein.

Der Begriff "luftdicht" umfasst vorliegend die Begriffe "gasdicht" und/oder "staubdicht". Mit dem Begriff "transparentes Schutzglas" und Abwandlungen davon wird ein transparentes optisches Fenster bezeichnet, das, abgesehen von Absorption, einen insbesondere senkrecht auftreffenden Laserstrahl im Wesentlichen optisch unverändert passieren lässt. Senkrechtes Auftreffen des Laserstrahls auf ein Element bedeutet in Ausführungsformen, dass der Laserstrahl mit seiner Ausbreitungsrichtung und/oder optischen Achse im Wesentlichen senkrecht auf das betreffende Element, z.B. Schutzglas, auftrifft. Die Begriffe "Laserstrahl" und "Bearbeitungslaserstrahl" werden synonym verwendet. Die Begriffe "Laserbearbeitungsvorrichtung" und "Bearbeitungsvorrichtung" werden ebenfalls synonym verwendet. Die Begriffe "Quarzglas" und "Quarz" werden synonym verwendet.

Ferner gilt hier für die Beschreibung von Wertebereichen, dass die Angabe eines breiten Bereichs mit engeren alternativen oder bevorzugten Bereichen auch Bereiche offenbart, die durch eine beliebige Kombination angegebener unterer Bereichsgrenzen mit angegebenen oberen Bereichsgrenzen gebildet werden können.

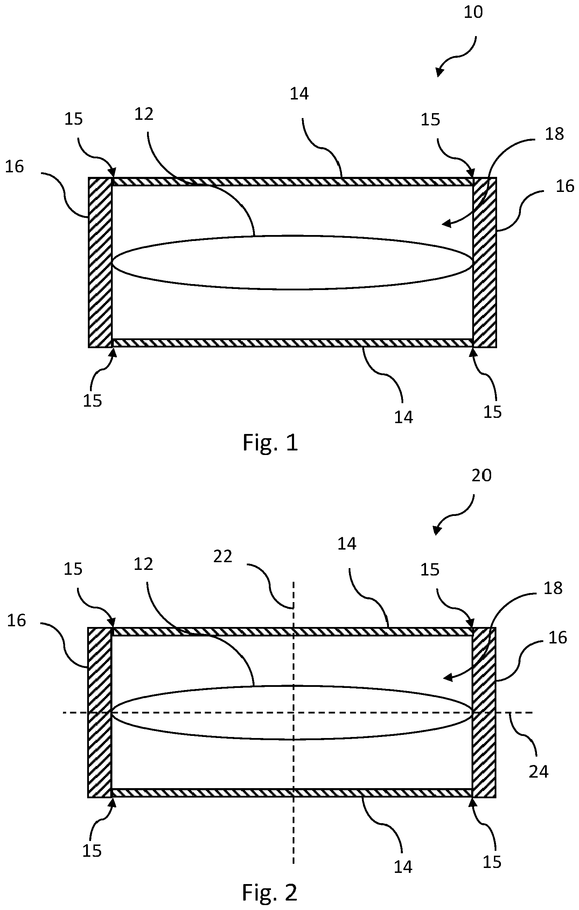

Fig. 1 veranschaulicht schematisch ein Beispiel einer optischen Einheit 10 für einen Laserstrahl zur Laserbearbeitung eines Werkstücks, gemäß Ausführungsformen. Fig. 1 zeigt eine seitliche Querschnittsansicht der optischen Einheit 10.

Die optische Einheit 10 weist als ein optisches Element zur optischen Abbildung eines Laserstrahls eine Fokussierlinse 12 auf. Die Fokussierlinse 12 ist in den Figuren nur schematisch dargestellt. Ferner sind zwei für den Laserstrahl transparente Schutzgläser 14 vorgesehen, zwischen denen die Fokussierlinse 12 angeordnet ist. Die Schutzgläser 14 besitzen umfangsseitige Außenränder 15. Letztere sind von einer Halterung 16 im Wesentlichen luftdicht umschlossen. Die Schutzgläser 14 bilden mit der Halterung einen Innenraum 17, in dem das optische Element 12 angeordnet ist.

Die Fokussierlinse 12, die Schutzgläser 14 und die Halterung 16 sind im vorliegenden Beispiel in einer Querschnittsebene (nicht gezeigt) senkrecht zur Figurenebene kreissymmetrisch oder rotationssymmetrisch ausgebildet. Das Material der Fokussierlinse 12 ist hochreines Quarzglas (Fused Silica, FS, SiO₂) und hat eine Wärmeleitfähigkeit von ungefähr 1,38 W/(m K). Die Fokussierlinse 12 hat einen Durchmesser von ungefähr 5,00 cm. Die Schutzgläser 14 sind aus hochreinem Saphir (Al₂O₃) gebildet und haben eine Wärmeleitfähigkeit von ungefähr 27,2 W/(m K). Die Schutzgläser 14 sind im vorliegenden Beispiel ungefähr 3 mm dick und haben einen Durchmesser von ungefähr 5,00 cm. In anderen Beispielen können die Schutzgläser 14 ungefähr 1 bis 3 mm dick sein. Die Halterung 16 ist ringförmig, ungefähr 6 mm dick, hat einen Innendurchmesser von ungefähr 5,00 cm, eine Höhe von ungefähr 2 cm und ist aus der Aluminiumlegierung AlMg_{4.5}Mn_{0.7} gebildet. Die Schutzgläser 14 und die Fokussierlinse 12 sind an der Halterung 16 angebracht, z.B. mit einer Verschraubung

Die optische Abbildung erfolgt mit der Fokussierlinse 12 aus Quarzglas, während die Schutzgläser 14 aus Saphir und die Halterung 16 die Fokussierlinse 12 vor Kontaminationen schützen. Die Schutzgläser 14 bewirken keine optische Abbildung des Laserstrahls. Daher werden mit der optischen Einheit 10 eine Vorwärtsstreuung und eine Doppelbrechung vermieden, während die Empfindlichkeit der Fokussierlinse 12 für Kontaminationen, Feuchtigkeit und Schmutz minimiert wird. Fokussierlinsen aus Quarz und Schutzgläser aus Saphir sind zudem gut verfügbar. Gleiches gilt für Schutzgläser aus Zinksulfid, die alternativ eingesetzt werden können. Insgesamt sind aufgrund der Bauweise der optischen Einheit 10 ihre Abbildungseigenschaften, insbesondere hinsichtlich Aberration, die Absorption des Laserstrahls, ihre Schmutzempfindlichkeit, die durch die optische Einheit bewirkte Vorwärtsstreuung und Doppelbrechung des Laserstrahls, sowie ihre Herstellbarkeit und die Herstellungskosten optimiert.

Fig. 2 zeigt schematisch ein Beispiel einer optischen Einheit 20 für einen Laserstrahl zur Laserbearbeitung eines Werkstücks, in einer seitlichen Querschnittsansicht.

Die optische Einheit 20 enthält im Unterschied zur optischen Einheit 10 der Fig. 1 im Innenraum 17 eine Reinraumatmosphäre. Beide Schutzgläser 14 sind jeweils als eine im Wesentlichen planparallele Platte ausgebildet und parallel zueinander angeordnet. Die Schutzgläser 14 und eine Ebene 24 des optischen Elements 20, die senkrecht zu einer optischen Achse 22 des optischen Elements 20 ausgerichtet ist, sind parallel zueinander angeordnet. So ist die optische Einheit derart ausgebildet, dass ein zu fokussierender Laserstrahl zum Beispiel sowohl auf die Schutzgläser 14 als auch auf das optische Element 20 im Wesentlichen senkrecht auftreffen kann. Das optische Element 20 ist benachbart und beabstandet zu den Schutzgläsern 14 angeordnet. Das optische Element 20 und die Schutzgläser 14 bilden eine Sandwichstruktur. Die vorgenannten Ausgestaltungen der optischen Einheit 20 ermöglichen somit eine kompakte und raumsparende Konfiguration der optischen Einheit.

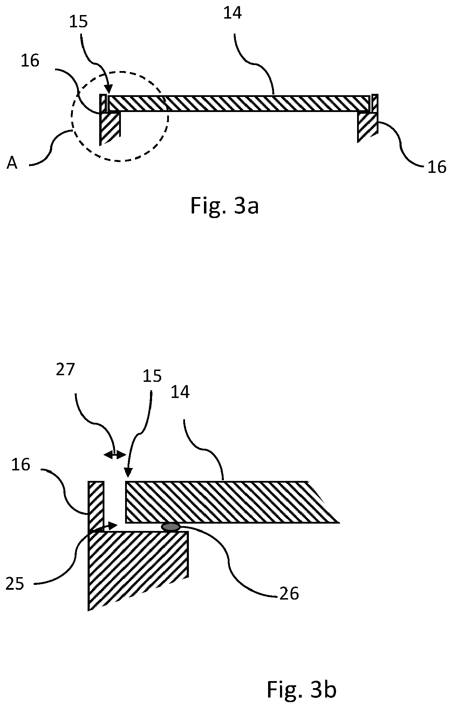

Fig. 3a und 3b zeigen beispielhaft eine Verbindungsstelle der Halterung 16 mit einem der Schutzgläser 14. Fig. 3b stellt den in Fig. 3a gezeigten kreisförmigen Ausschnitt A in einer Vergrößerung dar. Die Halterung 16 besitzt an beiden Enden eine Aussparung 25. In vorliegenden Beispiel besitzen die Schutzglaser 14 einen Durchmesser von ungefähr 5,30 cm, während die Halterung einen Innendurchmesser von ungefähr 5,00 cm hat. Wie in Fig. 3a und 3b veranschaulicht ist, liegt das Schutzglas 14 in der Aussparung 25 auf der Halterung 16 auf und ist an der Auflagestelle mittels einem Optikkleber 26 an der Halterung 16 befestigt. Das Schutzglas 14 ist seitlich, d.h. mit seinem umfangsseitigen Außenrand 15, in einem Abstand zur Halterung 16 angeordnet, der in Fig. 3b mit dem Doppelpfeil 27 kenntlich gemacht ist.

Als Optikkleber 26 kann ein handelsüblicher Kleber gewählt werden, der für Laserstrahl-Anwendungen geeignet ist, und ein Elastizitätsmodul von weniger als 500 MPa besitzt. Im vorliegenden Beispiel besitzt der Optikkleber 26 ein Elastizitätsmodul von ungefähr 200 MPa, während die Halterung 16 aus Aluminium ein Elastizitätsmodul von ungefähr 70 GPa hat. Für Beispiele, in denen für die Schutzgläser 14 Saphir oder ZnS als Material verwendet wird, kann das Elastizitätsmodul von Saphir ungefähr 345 GPa und das Elastizitätsmodul von ZnS ungefähr 88 GPa betragen.

Aufgrund der Elastizitätseigenschaften der Halterung 16 und des Optikklebers 26 sowie der räumlichen Konfiguration der optischen Einheit 20 hat das Schutzglas 14 innerhalb der Halterung 16 ein radiales Spiel. Während einer Bestrahlung der optischen Einheit 20 mit einem Laserstrahl, insbesondere einem Hochleistungslaserstrahl, wird so die Wärmeausdehnung der Halterung 16, des Schutzglases 14 und des Optikklebers 26 derart toleriert, dass die im Wesentlichen luftdichte Verbindung des Schutzglases 14 mit der Halterung 16 aufrecht erhalten bleibt.

Analog ist in einem weiteren Beispiel das optische Element 12 in einer Aussparung oder an einem Vorsprung der Halterung 16 mit einem Optikkleber an der Halterung 16 angebracht. Auch das optische Element 12 kann so im Wesentlichen luftdicht an der Halterung 16 angebracht sein.

Alternativ oder zusätzlich können in der optischen Einheit von Ausführungsformen mindestens ein Schutzglas 14 und/oder das optische Element 12 an der Halterung 16 jeweils mittels einer Verschraubung und/oder einer Fassung 28 angebracht sein. Die Fassung 28 für das Schutzglas 14 und/oder die Fassung 28 für das optische Element 12 kann in die Halterung 16 eingeschraubt, eingeklemmt und/oder eingeklebt sein. Die Fassung 28 kann leicht verformbar sein.

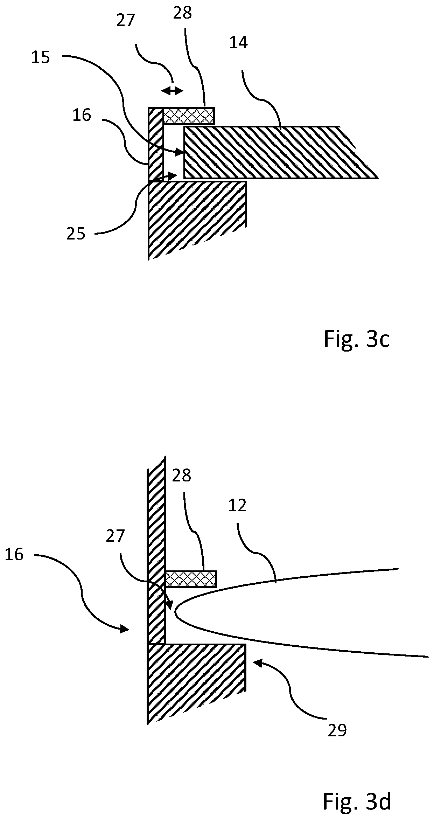

Zum Beispiel ist, wie in Fig. 3c gezeigt ist, das Schutzglas 14 an der Innenwand der Halterung 16 in der Aussparung 25 vorgesehen und von einem Innenring oder O-Ring als Fassung 28 in der Aussparung 25 gehalten. Die Fassung 28 ist aufgrund ihrer räumlichen Struktur und/oder ihres für Laser-Anwendungen geeigneten Materials leicht verformbar. Die Fassung bzw. der Innenring 28 kann beispielweise aus Edelstahl oder aus einer Aluminiumlegierung, z.B. AlMg_{4.5}Mn_{0.7}, gebildet sein. Seitlich ist das Schutzglas 14 mit seinem Außenrand 15 in einem Abstand 27 zur Halterung 16 angeordnet und besitzt ein radiales Spiel. Der Innenring 28 weist ein Gewinde (nicht gezeigt) auf, mit dem dieser in ein Innengewinde (nicht gezeigt) der Halterung 16 im Wesentlichen luftdicht eingeschraubt ist. Das Schutzglas 14 liegt an oder auf dem verformbaren Innenring 28. Das Schutzglas 14 ist so im Wesentlichen luftdicht an der Halterung 16 angebracht.

Analog ist in einem weiteren Beispiel das optische Element 12 zwischen einem Vorsprung 29 der Halterung 16 und einem Innenring als Fassung 28 an der Halterung 16 angebracht, wie in Fig. 3d gezeigt ist. Auch das optische Element 12 kann im Wesentlichen luftdicht an der Halterung 16 angebracht sein.

Die Fassung 28 kann in den Beispielen der Fig. 3c und 3d, zusätzlich oder alternativ zur Verschraubung, in die Halterung 16 eingeklemmt und/oder mit einem Optikkleber eingeklebt sein.

So kann eine Wärmeausdehnung eines oder beider Schutzgläser 14, des optischen Elements 12, der Fassung 28 und/oder der Halterung 16 bei einer Verschraubung toleriert werden, während deren Verbindungen, insbesondere deren im Wesentlichen luftdichte Verbindungen, erhalten bleiben.

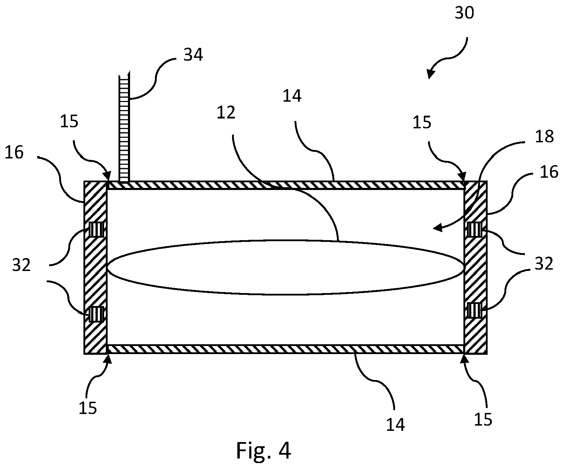

Fig. 4 zeigt als ein weiteres Beispiel eine optische Einheit 30 gemäß Ausführungsformen. Die optische Einheit 30 besitzt im Unterschied zu den optischen Einheiten 10 und 20 eine Kühleinrichtung mit Kühlkanälen 32, die in der Halterung 16 vorgesehen sind. Die Kühlkanäle 32 können bei der Laserbearbeitung von einem Kühlfluid, z.B. Wasser oder flüssiger Stickstoff, durchströmt werden und so die optische Einheit 30 kühlen.

Die optische Einheit 30 ist zudem mit einem Thermofühler 34 versehen, der mit einem der Schutzgläser 14 wärmeleitend verbunden ist. Der Thermofühler 34 kann beispielsweise mit einem Pt100 realisiert werden und dient als erste Einrichtung zum Überwachen der thermischen Eigenschaften des Schutzglases 14.

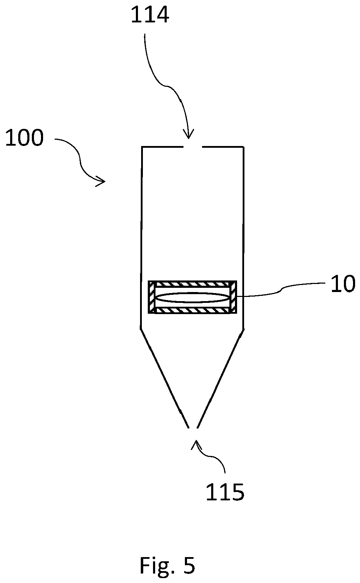

Fig. 5 veranschaulicht schematisch ein Beispiel einer Laserbearbeitungsvorrichtung 100 gemäß Ausführungsformen der Erfindung.

Die Laserbearbeitungsvorrichtung 100 ist als ein Laserbearbeitungskopf ausgebildet. Der Laserbearbeitungskopf 100 besitzt eine Schnittstelle 114 für eine Laserquelle zum Erzeugen eines Bearbeitungslaserstrahls und eine Austrittsöffnung 115. Zwischen der Schnittstelle 114 und der Austrittsöffnung 115 ist die in Fig. 1 gezeigte optische Einheit 10 angeordnet.

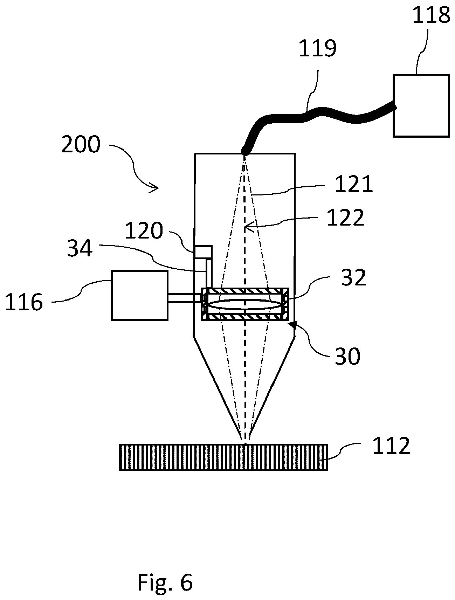

Fig. 6 stellt schematisch als ein Beispiel eine Bearbeitungsvorrichtung 200 dar. Die Bearbeitungsvorrichtung 200 ist als ein Bearbeitungskopf ausgebildet, der im Unterschied zum Laserbearbeitungskopf 100 der Fig. 5 statt mit der optischen Einheit 10 mit der optischen Einheit 30 der Fig. 4 ausgestattet ist. An der Schnittstelle 114 ist eine Laserquelle 118 zum Erzeugen eines Laserstrahls 121 vorgesehen, der in Fig. 6 mit gestrichelten Linien als ein Strahlenbündel mit einer Ausbreitungsrichtung 122 dargestellt ist. Im vorliegenden Beispiel ist zur Ankopplung der Laserquelle 118 eine Transportfaser 119 vorgesehen. In alternativen Beispielen kann die Bearbeitungslaserquelle 118 direkt an der Schnittstelle 114 vorgesehen sein. Die Bearbeitungslaserquelle 118 besitzt in den vorliegenden Beispielen eine Leistung von ungefähr 6 kW und erzeugt den Bearbeitungslaserstrahl in einem Spektralbereich, der eine Wellenlänge von 1070 nm beinhaltet. Es können jedoch auch Bearbeitungslaserquellen mit einer geringeren Leistung als 6 kW, z.B. ca. 1 kW, oder mit einer Leistung größer als 6 kW eingesetzt werden.

Die Bearbeitungsvorrichtung 200 besitzt eine Kühlvorrichtung 116, die mit der Kühleinrichtung, d.h. den Kühlkanälen 32 der optischen Einheit 30 kühlfluid-leitend verbunden ist. Die Bearbeitungsvorrichtung ist ferner mit einer zweiten Einrichtung 120 zum Überwachen der thermischen Eigenschaften des Schutzglases 14, das in Richtung der Schnittstelle 114 angeordnet ist, versehen. Die zweite Einrichtung 120 ist wiederum mit dem Thermofühler 34, der mit dem betreffenden Schutzglas 14 in Kontakt steht, verbunden.

Im Betrieb der Bearbeitungsvorrichtung 200 wird mit der Laserquelle 118 der Laserstrahl 121 erzeugt. Von der Schnittstelle 114 aus wird der Laserstrahl in Ausbreitungsrichtung 122 auf die optische Einheit 30 gerichtet. Dort passiert der Laserstrahl 121 das in Richtung der Schnittstelle 114 angeordnete Schutzglas 14, wird von der Fokussierlinse 12 fokussiert, passiert das in Richtung der Austrittsöffnung 115 angeordnete Schutzglas 14 und trifft durch die Austrittsöffnung 115 auf dem zu bearbeitenden Werkstück 112 auf.

Durch die luftdichte Verbindung der Schutzgläser 14 mit der Halterung 16 und der Reinraumatmosphäre im Innenraum 18 der optischen Einheit 30 wird eine Kontamination der Oberflächen der Fokussierlinse 12 vermieden. Wenn der Laserstrahl 121 die Fokussierlinse 12 passiert, wird diese somit nicht durch Oberflächen-Kontaminationen übermäßig erwärmt. Auch bei Langzeitanwendungen können daher Beschädigungen der Fokussierlinse 12 und unerwünschte Veränderungen der Abbildungseigenschaften der Fokussierlinse 12 vermieden werden.

Während des Betriebes der Bearbeitungsvorrichtung 200 wird mittels der Kühlvorrichtung 116 durch die Kühlkanäle 32 der Halterung 16 Kühlwasser geleitet. Auf diese Weise wird die Temperatur der Halterung 16 und somit der ganzen optischen Einheit 30 auf einem erwünschten Niveau gehalten. Gleichzeitig wird mit dem Thermofühler 34 und der zweiten Einrichtung 120 zum Überwachen der thermischen Eigenschaften des Schutzglases 14 dessen Temperatur gemessen. So kann ein unerwünschter Anstieg der Temperatur des Schutzglases 14 erkannt und einem dadurch zu erwartenden Fokusshift entgegengewirkt werden, z.B. mit einer Veränderung der Position der optischen Einheit im Strahlengang des Laserstrahls. Alternativ oder zusätzlich kann so ein gegebenenfalls erforderlicher Austausch der optischen Einheit angezeigt werden. In einer Abwandlung dieses Beispiels ist die Kühlvorrichtung 116 mit einem regelbaren Ventil für das Kühlwasser versehen und mit der zweiten Einrichtung 120 zum Überwachen der thermischen Eigenschaften des Schutzglases 14 mittels einer Steuerung datenverarbeitend verbunden. Auf diese Weise kann im Betrieb der Bearbeitungsvorrichtung 200 die Temperatur der optischen Einheit 30 geregelt sowie insbesondere stabilisiert werden.

Bei allen Beispielen und Ausführungsformen der Bearbeitungsvorrichtungen 100 und 200 können, insbesondere im Bearbeitungskopf, zusätzliche transmissive optische Elemente (z.B. Linsen) und/oder zusätzliche reflektive optische Elemente (z.B. plane Spiegel) vorgesehen sein, beispielsweise zur Ablenkung des Bearbeitungslaserstrahls 121. Diese zusätzlichen optischen Elemente können ebenfalls als optische Einheiten gemäß Ausführungsformen der Erfindung ausgestaltet sein.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für Laserbearbeitungsanlagen angewendet werden kann, sondern auch für andere Laser umfassende Geräte. Des Weiteren können die Bauteile der Bearbeitungsvorrichtung zur Laserbearbeitung von Werkstücken auf mehrere physikalische Produkte verteilt realisiert werden.

### Bezugszeichenliste

- 10, 20, 30: optische Einheit
- 12: optisches Element
- 14: Schutzglas
- 15: Außenrand
- 16: Halterung
- 18: Innenraum
- 22: optische Achse des optischen Elements
- 24: Ebene des optischen Elements
- 25: Aussparung
- 26: Optikkleber
- 27: Abstand, Doppelpfeil
- 28: Fassung, Verschraubung
- 32: Kühleinrichtung, Kühlkanäle
- 34: erste Einrichtung zum Überwachen, Thermofühler
- 100: Bearbeitungsvorrichtung, Laserbearbeitungskopf
- 112: Werkstück
- 114: Schnittstelle
- 115: Austrittsöffnung
- 116: Kühlvorrichtung
- 118: Laserquelle
- 119: Transportfaser
- 120: zweite Einrichtung zum Überwachen
- 121: Laserstrahl
- 122: Ausbreitungsrichtung
- 200: Bearbeitungsvorrichtung, Laserbearbeitungskopf
- A: Ausschnitt

## Patentansprüche

1. Optische Einheit für einen Laserstrahl zur Laserbearbeitung eines Werkstücks, insbesondere für einen Hochleistungslaserstrahl, mit
einem optischen Element (12) zur optischen Abbildung des Laserstrahls, und
zwei für den Laserstrahl transparenten Schutzgläsern (14), deren Außenränder von einer Halterung (16) luftdicht derart umschlossen sind, dass sie mit der Halterung einen Innenraum (18) bilden,
wobei das optische Element im Innenraum angeordnet ist.

2. Optische Einheit nach Anspruch 1,
wobei das optische Element (12) eine Wärmeleitfähigkeit von kleiner oder gleich 2 W/(m K) besitzt; und/oder
wobei das optische Element (12) mindestens ein Material ausgewählt aus Quarzglas und Kalziumfluorid enthält oder daraus gebildet ist; und/oder
wobei mindestens eines der Schutzgläser (14) eine Wärmeleitfähigkeit von größer oder gleich 10 W/(m K) besitzt; und/oder
wobei mindestens eines der Schutzgläser (14) mindestens ein Material ausgewählt aus Saphir und Zinksulfid enthält oder daraus gebildet ist.

3. Optische Einheit nach Anspruch 1 oder 2,
wobei in dem von den Schutzgläsern (14) und der Halterung (16) gebildeten Innenraum (18) eine Reinraumatmosphäre, ein inertes Gas, ein Vakuum und/oder eine nicht kondensierende Atmosphäre vorgesehen ist.

4. Optische Einheit nach einem der vorstehenden Ansprüche,
wobei das optische Element (12) zwischen den Schutzgläsern (14) und/oder im Strahlengang des Laserstrahls zwischen den Schutzgläsern (14) angeordnet ist; und/oder
wobei das optische Element (12) benachbart und/oder beabstandet zu mindestens einem der Schutzgläser (14) angeordnet ist; und/oder
wobei das optische Element und die Schutzgläser eine Sandwichstruktur bilden; und/oder
wobei das optische Element (12) und/oder die Schutzgläser (14) an der Halterung (16) befestigt oder angebracht sind.

5. Optische Einheit nach einem der vorstehenden Ansprüche,
wobei mindestens eines der Schutzgläser als im Wesentlichen planparallele Platte ausgebildet ist; und/oder
wobei die Schutzgläser im Wesentlichen parallel zueinander angeordnet sind; und/oder
wobei die Schutzgläser und eine Ebene (22) des optischen Elements (12), die senkrecht zu einer optischen Achse (22) des optischen Elements und/oder zu einer Ausbreitungsrichtung (122) des Laserstrahls ausgerichtet ist, im Wesentlichen parallel zueinander angeordnet sind.

6. Optische Einheit nach einem der vorstehenden Ansprüche,
wobei die Schutzgläser (14) mit einem Optikkleber (26) und/oder mit einer Verschraubung (28) an der Halterung (16) befestigt oder angebracht sind; und/oder
wobei das optische Element (12) mit einem Optikkleber und/oder mit einer Verschraubung (28) an der Halterung (16) befestigt oder angebracht ist.

7. Optische Einheit nach einem der vorstehenden Ansprüche,
wobei die Halterung mit einer Kühleinrichtung (32), insbesondere mit internen Kühlkanälen, versehen ist.

8. Optische Einheit nach einem der vorstehenden Ansprüche,
wobei das optische Element zur optischen Abbildung des Laserstrahls derart ausgebildet ist, dass es für den Laserstrahl zumindest teilweise reflektiv ist, für den Laserstrahl zumindest teilweise transmissiv ist, für den Laserstrahl eine Brennweite einstellt, den Laserstrahl leitet, den Laserstrahl umlenkt und/oder den Laserstrahl formt; und/oder
wobei mindestens eines der Schutzgläser derart ausgebildet ist, dass die optischen Eigenschaften des Laserstrahls im Wesentlichen nicht verändert werden.

9. Optische Einheit nach einem der vorstehenden Ansprüche,
wobei die optische Einheit und/oder die Halterung derart ausgebildet sind, dass eine Wärmeausdehnung mindestens einer Komponente der optischen Einheit toleriert wird, insbesondere luftdicht toleriert wird,
wobei die Komponente ausgewählt ist aus einem oder zwei der Schutzgläser, dem optischen Element, der Halterung, dem Optikkleber, der Verschraubung, der Kühleinrichtung, einer Atmosphäre im Innenraum und/oder eines Gases im Innenraum.

10. Optische Einheit nach einem der vorstehenden Ansprüche,
wobei mindestens eine erste Einrichtung (34) zum Überwachen der optischen, thermischen und/oder mechanischen Eigenschaften mindestens eines der Schutzgläser (14) und/oder des optischen Elements (12) vorgesehen ist.

11. Laserbearbeitungsvorrichtung, insbesondere Laserbearbeitungskopf, mit
einer Schnittstelle (114) für eine Laserquelle (118) zum Erzeugen eines Laserstrahls (121); und
einer optischen Einheit (10; 20; 30) nach einem der Ansprüche 1 bis 10, wobei die optische Einheit im Strahlengang des Laserstrahls (121) angeordnet ist.

12. Laserbearbeitungsvorrichtung nach Anspruch 11,
wobei eine Kühlvorrichtung (116) vorgesehen ist, die mit der Kühleinrichtung (32), insbesondere mit den Kühlkanälen, der Halterung (16) gekoppelt ist; und/oder
wobei die Schnittstelle (114) mit einer Laserquelle (118) gekoppelt oder versehen ist, die den Laserstrahl (121) mit einer Leistung größer oder gleich 6 kW, bevorzugt größer oder gleich 10 kW, bereitstellt.

13. Laserbearbeitungsvorrichtung nach Anspruch 11 oder 12,
weiter umfassend mindestens eine zweite Einrichtung (120) zum Überwachen der optischen, thermischen und/oder mechanischen Eigenschaften mindestens eines der Schutzgläser (14) und/oder des optischen Elements (12).

14. Verwendung einer optischen Einheit (10; 20; 30) nach einem der Ansprüche 1 bis 10 oder einer Laserbearbeitungsvorrichtung nach einem der Ansprüche 11 bis 13 zur Laserbearbeitung eines Werkstücks (112), insbesondere zur Hochleistungslaserbearbeitung.
